# EUROPEAN PATENT SPECIFICATION

(11) **EP 3 488 912 B1**
(45) Date of publication and mention of the grant of the patent: **08.07.2020**
(21) Application number: 17204191.5
(22) Date of filing: 28.11.2017
(51) Int. Cl.: B01D 53/04

(54) **GASEOUS STREAM TREATMENT APPARATUS AND PLANT FOR THE PRODUCTION OF BITUMINOUS MACADAMS COMPRISING SAID TREATMENT APPARATUS**
GASSTROMBEHANDLUNGSVORRICHTUNG UND ANLAGE ZUR HERSTELLUNG VON BITUMINÖSEN MAKADAMEN MIT DIESER BEHANDLUNGSVORRICHTUNG
APPAREIL DE TRAITEMENT DE FLUX GAZEUX ET INSTALLATION POUR LA PRODUCTION DE MACADAMS BITUMINEUX COMPRENANT CET APPAREIL DE TRAITEMENT

(43) Date of publication of application: 29.05.2019
(73) Proprietor: Ammann Switzerland Ltd., 4900 Langenthal (CH)
(72) Inventor: Carlotto, Mario Flavio, 4900 Langenthal (CH); Mantovani, Filippo, 4900 Langenthal (CH)
(74) Representative: Ponchiroli, Simone

(56) References cited:
- EP-A1- 0 790 854
- US-A1- 2010 300 145
- US-A1- 2014 216 254

## Description

This invention relates to a gaseous stream treatment apparatus, in particular for reducing the content of total organic carbon and/or the content of other polluting compounds in the gaseous stream. This invention relates in general to the sector for cleaning off-gases.

This invention also relates to a plant for the production of bituminous macadams, wherein the plant comprises the treatment apparatus for treating at least part of the off-gases and/or of the gaseous emissions generated by the plant.

With reference in particular to the sector of the production of bituminous macadams, for example asphalt for road paving, it is well known the problem of managing emissions to air that are generated by production plants. Environmental regulations impose strict limits on the content of pollutants in gaseous emissions to air. In the specific case of bituminous macadam plants, the content of pollutants is often assessed in terms of total organic carbon, which mostly includes volatile organic compounds and, to a lesser extent, other organic compounds.

Volatile organic compounds mainly form during operations for heating and drying stone materials (gravel, stones, etc.) to be used in the mixture of materials that form the bituminous macadam, due to incomplete combustion of the fuels used for these operations.

Another part of the organic compounds that contribute to the total organic carbon is constituted of compounds found in bitumen and which are released with heating. In particular, this part of organic compounds increases with the quantity of milled asphalt material (that is to say, reclaimed asphalt) that is used in the mixture that forms the bituminous macadam. In fact, the milled asphalt material, upon making contact with hot parts of the plant or directly with the combustion flame of the fuel, releases volatile organic compounds.

The quantity of volatile organic compounds that is released with heating also depends on the operating temperature and in particular becomes significant for temperatures above 300 °C, considerably increasing with an increase in the temperature.

Some of the solutions currently adopted in order to comply with emissions limits set by the regulations attempt to reduce the production of volatile organic compounds by limiting the operating temperatures in the plant. Such solutions may have limited effectiveness and may be difficult to manage. The use of large quantities of milled asphalt material in the mixture makes it particularly difficult to stay within emission limits without compromising plant productivity.

Other solutions involve conveying the off-gases towards a treatment unit for reducing their total organic carbon content. Such treatment units may be, for example, thermal or catalytic oxidation units, burners, washing units or others. One problem linked to these solutions relates to the running costs and the possible low level of effectiveness. In fact, it must be taken into account that the concentration of volatile organic compounds in the off-gases in question is small (at most approximately several hundred milligrams per normal cubic metre) and that the emission limits to be taken as the reference are approximately 50 mg/Nm³, therefore, in order to be effective, the treatment units must treat large flow rates of gases in a very selective way. Moreover, the treatment units according to prior art may be very bulky and their positioning in the plant may be problematic.

Other emissions of volatile organic substances occur, for example, in areas used for loading or unloading hot bituminous materials. In some cases systems for collecting even such diffuse emissions have been put in place. However, the problem of finding an effective treatment for the emissions collected still remains.

It must also be considered that some volatile organic compounds are perceptible to the human sense of smell even in very low concentrations, of around parts per trillion. Although complying with the emission limits imposed by the regulations, in some cases bituminous macadam production plants may cause odour generation problems.

The problems discussed above may also be encountered in other sectors, different to the production of bituminous macadams.

For example, EP 0 790 854 A1 relates to a method of heating a pressure and temperature swing adsorption gas filtration bed unit. The gas filtration bed unit has a number of layers of adsorbent material and heaters located upstream of each of these layers. The heaters are disc shaped and located within divider elements which may be used for supporting and in turn being supported by the adsorbent of adjacent adsorbent material layers. A bed of zeolite with a volume of 38.5 dm³ is used; the bed is divided into four layers by the divider elements. EP 0 790 854 A1 explicitly excludes any direct electrical heating of the adsorbent bed.

US 2014/0216254 A1 relates to an apparatus for a swing adsorption process. The apparatus has a plurality of adsorbent bed units, a rotary valve assembly, and a plurality of reciprocating valve assemblies. Each of the plurality of adsorbent bed units is in fluid communication with the rotary valve assembly via one of the plurality of reciprocating valve assemblies. The adsorbent bed is made of beaded or pelletized adsorbent particles.

US 2010/0300145 A1 relates to an apparatus for carrying out adsorption processes. The apparatus has a plurality of chambers in which a plurality of fluid flows is distributed. The chambers contain a non-cohesive or granular material with adsorbent properties, such as macroporous resins or activated carbons with low ash content. The non-cohesive adsorbent material is retained by opposed meshes, supported by grids to withstand the thrust of the gases that pass through the process chambers. In particular, the provision of two opposed meshes allows gas speed to be increased.

In this context, the technical purpose which forms the basis of this invention is to provide a gaseous stream treatment apparatus that overcomes, or at least reduces, the disadvantages encountered with the prior art solutions, or that in any case offers an alternative solution to the prior art solutions.

The technical purpose and the aims indicated are substantially achieved by a gaseous stream treatment apparatus for reducing the content of total organic carbon and/or the content of other polluting compounds in the gaseous stream, as described in claim 1. Particular embodiments of this invention are defined in the corresponding dependent claims. Moreover, this invention also relates to a plant for the production of bituminous macadams comprising said treatment apparatus, as defined in the corresponding claims.

According to one aspect of this invention, the treatment apparatus comprises a plurality of treatment compartments, each equipped with at least one adsorbent element suitable for adsorbing organic compounds that contribute to the total organic carbon and/or other polluting compounds. Using the physical principle of adsorption and suitably selecting the adsorbent material to be used, the treatment apparatus is useful for selectively removing the relevant pollutants from the gaseous stream, even when the concentrations of pollutants are low.

In practice, the treatment apparatus behaves like a filter that removes and concentrates the polluting compounds: during the operating phase the polluting compounds are removed from the gaseous stream and retained by the adsorbent material; during the regeneration phase the polluting compounds are released by the adsorbent material and removed with a purging fluid stream that, being small in comparison with the gaseous stream treated, when it comes out is very rich in pollutants. Thanks to the high concentration of polluting compounds in the purging stream, the latter can be treated in an economical and technically advantageous way with known systems.

According to this invention, the adsorbent material is a sheet or a portion of cloth with activated material, such as cloth with activated carbon or cloth with zeolite. The use of cloth with activated material is particularly advantageous, both because it is easier to handle than granular activated materials, and because the regeneration is simpler and faster. Moreover, the cloth with activated carbon is less sensitive to humidity than granular activated carbon. The same applies for the cloth with zeolite.

According to another aspect of this invention, the regeneration (that is to say, desorption) of the treatment compartments may be performed without stopping the treatment apparatus. In fact, during use, some treatment compartments are in the operating condition and other treatment compartments are in the regeneration condition. The regeneration system is operated in such a way as to cyclically switch each treatment compartment from the operating condition to the regeneration condition and vice versa. During regeneration, heating of the adsorbent material is required in order to promote the release of the polluting compounds adsorbed. Moreover, a purging fluid stream (in particular a stream of air) is made to flow in the treatment compartment to be regenerated so as to remove the polluting compounds released.

According to one embodiment of this invention, the heating of the adsorbent elements in the regeneration condition is achieved by Joule effect in the self-same adsorbent material. For this purpose, the adsorbent material is electrically conductive (for example, it is a cloth with conductive activated carbon) and during regeneration an electric potential difference is applied to it in order to produce an electric current that flows through the adsorbent material. That is useful for speeding up the heating and the regeneration phase, as well as for obtaining uniform heating of the adsorbent material.

In one embodiment, the purging fluid stream is fed to, and discharged from, the treatment compartments in the regeneration condition by movable ducts that can adopt a plurality of positions. In each position the movable ducts are in communication with the compartments to be regenerated and at the same time they prevent the latter from receiving the gaseous stream to be treated. That is useful for facilitating management of the regeneration phases without interrupting operation of the treatment apparatus and of the plant to which it is connected.

In a specific embodiment, the movable ducts are rotatable about respective axes of rotation and therefore the movement from one position to another is a rotating movement. Regeneration of all of the treatment compartments is completed with a full rotation, of 360 degrees, of the movable ducts about their axes of rotation.

In one embodiment, the adsorbent elements are suitable for also retaining dust conveyed by the gaseous stream and may be used as dust removal bags. That is useful for combining in a single treatment apparatus a gaseous pollutant reducer and a dust removal filter.

The treatment apparatus according to this invention has a specific application in a plant for the production of bituminous macadams (such as asphalt for road paving), that in particular involves phases of heating the material during which compounds that contribute to the total organic carbon are produced or released. In such a plant, the treatment apparatus may be used both for reducing the emissions from processing units, and for reducing diffuse emissions, which are suitably collected.

However, the treatment apparatus according to this invention may also be used in other types of plants and in other sectors in which the content of polluting compounds of a gaseous stream must be reduced.

Moreover, the treatment apparatus according to this invention may also be effective for reducing the content of other pollutants such as nitrogen oxides and carbon monoxide. That may depend on a suitable choice of the adsorbent material.

Further features and the advantages of this invention will be more apparent in the detailed description below, with reference to a preferred, non-limiting embodiment of a gaseous stream treatment apparatus. Reference will be made to the accompanying drawings, in which:
- Figure 1 is a schematic view of a plant for the production of bituminous macadams comprising a treatment apparatus according to this invention;

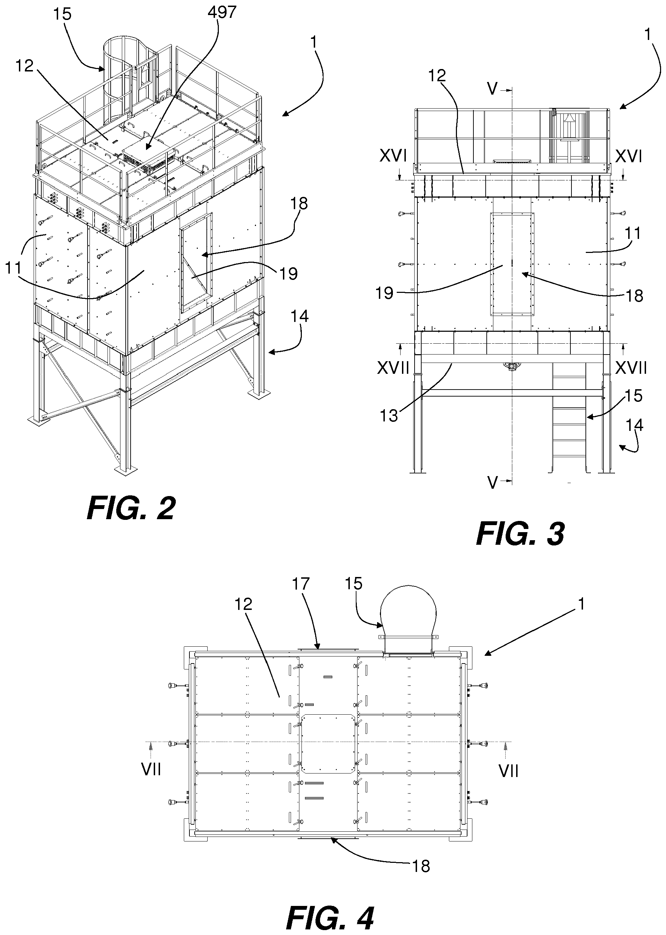

- Figure 2 is an axonometric view of an embodiment of a treatment apparatus according to this invention;
- Figure 3 is a side view of the treatment apparatus of Figure 2;
- Figure 4 is a top view of the treatment apparatus of Figure 2;

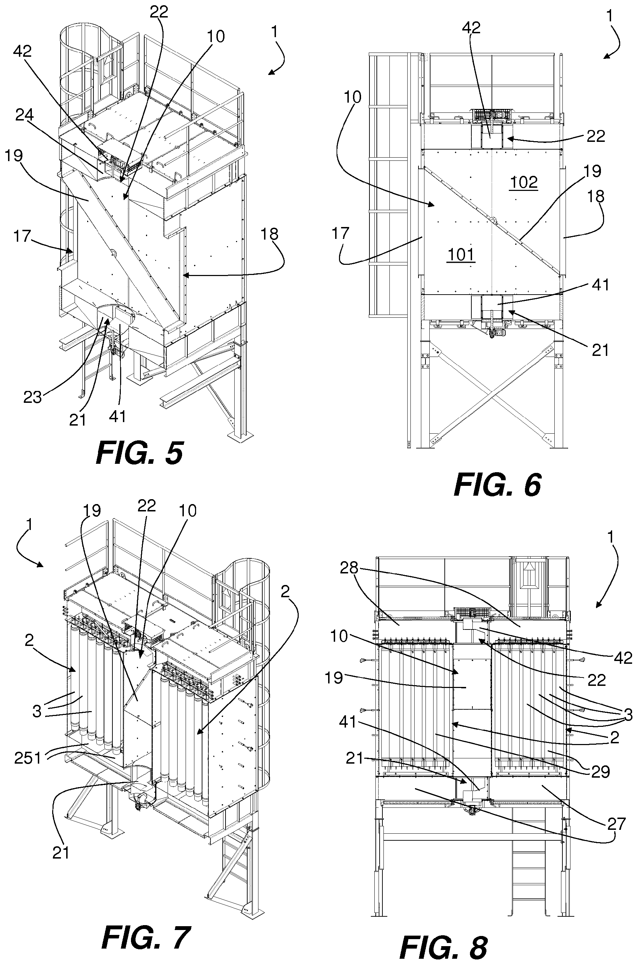

- Figure 5 is an axonometric sectional view of the treatment apparatus of Figure 2, in section according to the section line V-V in Figure 3;
- Figure 6 is a side sectional view of the treatment apparatus of Figure 2, in section according to the section line V-V in Figure 3;
- Figure 7 is an axonometric sectional view of the treatment apparatus of Figure 2, in section according to the section line VII-VII in Figure 4;
- Figure 8 is a side sectional view of the treatment apparatus of Figure 2, in section according to the section line VII-VII in Figure 4;

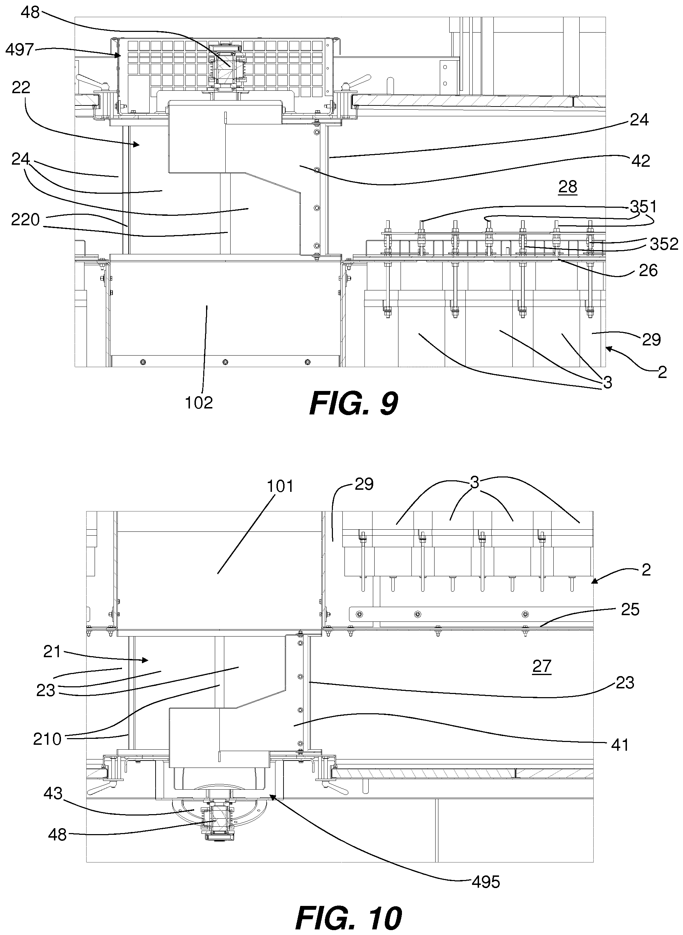

- Figure 9 is a first enlarged detail of the sectional view in Figure 8;
- Figure 10 is a second enlarged detail of the sectional view in Figure 8;
- Figures 11 to 13 are respectively an axonometric view and two side views of a component at the top of the treatment apparatus of Figure 2;
- Figure 14 is a side view of a component at the bottom of the treatment apparatus of Figure 2;
- Figure 15 is an axonometric view of an alternative embodiment of the component of Figures 11 to 13;
- Figure 16 is a top sectional view of the treatment apparatus of Figure 2, in section according to the section line XVI-XVI in Figure 3;
- Figure 17 is a bottom sectional view of the treatment apparatus of Figure 2, in section according to the section line XVII-XVII in Figure 3;
- Figures 18 to 22 are respectively an axonometric view, a side view partly in section, a side view in section, a side view of an internal element, and a top view for another component of the treatment apparatus of Figure 2;
- Figures 23 to 27 are schematic views of the gaseous stream flows in the treatment apparatus of Figure 2;
- Figures 28 and 29 show the sectional views of Figures 16 and 17 for a first step of a regeneration phase of a compartment of the treatment apparatus of Figure 2;
- Figures 30 and 31 show the sectional views of Figures 16 and 17 for a second step of the regeneration phase;
- Figures 32 and 33 show the sectional views of Figures 16 and 17 for a third step of the regeneration phase;
- Figures 34 and 35 show the sectional views of Figures 16 and 17 for the first step of the regeneration phase of another compartment of the treatment apparatus of Figure 2;
- Figure 36 is a side view, partly in section, of an alternative embodiment of the component shown in Figures 18 to 22.

With reference to the above-mentioned figures, a gaseous stream treatment apparatus according to this invention has been labelled with the numeral 1 in its entirety. The treatment apparatus 1 is usable for reducing the content of total organic carbon and/or the content of other polluting compounds in the gaseous stream to be treated.

As already indicated above and as is known in the sector, total organic carbon (TOC) is a measurable indicator of the quantity of organic compounds contained in a gaseous or liquid volume. The expression "reducing the content of total organic carbon" therefore means reducing the content of organic compounds that contribute to the total organic carbon. In the specific case of off-gases of plants for the production of bituminous macadams, the total organic carbon is almost completely due to volatile organic compounds, as already indicated above. The other polluting compounds could be, for example, nitrogen oxides, sulphur oxides or carbon monoxide.

The treatment apparatus 1 comprises a plurality of treatment compartments 2, each of which is equipped with at least one adsorbent element 3 suitable for adsorbing organic compounds that contribute to the total organic carbon and/or other polluting compounds. The treatment compartments 2 are separated from each other by walls and each treatment compartment 2 has two apertures 23, 24 which in use are an inlet and an outlet for the gaseous stream.

In the particular embodiment illustrated, there are six treatment compartments 2 and each of them comprises twenty-four adsorbent elements 3, divided into four rows that are offset from one another. For example, each treatment compartment 2 has a height of 2.5 metres, a width in plan view of 1.4 metres and a depth in plan view of 0.7 metres.

Obviously, other numbers and configurations are possible both for the treatment compartments 2 and for the adsorbent elements 3.

The treatment apparatus 1 comprises lateral walls 11, a top wall 12 and a bottom wall 13 that together form a box-shaped casing containing the treatment compartments 2. For example, the walls are made of sheet metal, like the internal walls that separate the treatment compartments 2 from each other. The treatment apparatus 1 also comprises a self-supporting structure 14, which keeps the box-shaped casing raised off the ground, and a ladder 15 for access to the top wall 12.

The treatment apparatus 1 comprises an infeed opening 17 for the gaseous stream to be treated and an outfeed opening 18 for the gaseous stream treated. Specifically, the infeed opening 17 and the outfeed opening 18 are on opposite sides of the box-shaped casing and are passage windows made in respective lateral walls 11. Each of them has a frame to which a respective duct can be fixed. Obviously, in other embodiments the infeed opening 17 and the outfeed opening 18 could be made differently.

In the embodiment illustrated, the infeed opening 17 and the outfeed opening 18 both communicate with a central region 10 of the treatment apparatus 1. A panel 19, positioned obliquely, divides the central region 10 into two portions 101, 102 that do not directly communicate with each other: the infeed opening 17 opens onto one portion (for example, the lower portion 101) and the outfeed opening 18 opens onto the other portion (for example, the upper portion 102). Moreover, the treatment compartments 2 are positioned around the central region 10 (specifically, three on one side and three on the other side), from which they are separated by respective walls. The treatment apparatus 1 comprises a distribution chamber 21 that is in communication with the infeed opening 17 and onto which respective inlets 23 of the treatment compartments 2 open. Specifically, the inlets 23 of the treatment compartments 2 open on a wall 210 of the distribution chamber 21. Relative to the path of the gaseous stream, the distribution chamber 21 is interposed between the infeed opening 17 and the treatment compartments 2. The function of the distribution chamber 21 is to receive the gaseous stream fed in and distribute it between the treatment compartments 2.

In particular, the distribution chamber 21 is at the bottom of the box-shaped casing and is in communication with the infeed opening 17 by means of the lower portion 101 of the central region 10. As shown in the figures, the distribution chamber 21 is made on the bottom of the lower portion 101.

The treatment apparatus 1 comprises a collection chamber 22 that is in communication with the outfeed opening 18 and onto which respective outlets 24 of the treatment compartments 2 open. Specifically, the outlets 24 of the treatment compartments 2 open on a wall 220 of the collection chamber 22. Relative to the path of the gaseous stream, the collection chamber 22 is interposed between the treatment compartments 2 and the outfeed opening 18. The function of the collection chamber 22 is to act as a manifold that receives from the treatment compartments 2 the respective portions of gaseous stream treated.

In particular, the collection chamber 22 is at the top of the box-shaped casing and is in communication with the outfeed opening 18 by means of the upper portion 102 of the central region 10. As shown in the figures, the collection chamber 22 is made in the top of the upper portion 102. Therefore, in the embodiment illustrated, the distribution chamber 21 and the collection chamber 22 are on opposite sides of the central region 10. Relative to the path of the gaseous stream, the treatment compartments 2 are in parallel with each other. The gaseous stream fed in is divided between the treatment compartments 2, where the adsorbent elements 3 adsorb at least part of the compounds to be reduced, so that the gaseous stream fed out contains fewer of those compounds.

The treatment apparatus 1 may comprise a fan or an extractor (not illustrated) which forces the gaseous stream along the path. In particular, the treatment apparatus 1 is intended to operate in a negative pressure condition, therefore, a fan or an extractor is positioned downstream of the outfeed opening 18.

The apparatus 1 comprises a system for regeneration of the adsorbent elements 3 by desorption of the compounds adsorbed by the adsorbent elements 3. The regeneration system can adopt a plurality of configurations, each of which corresponds to a condition for the regeneration of one or more respective treatment compartments 2. The regeneration system is suitable for feeding a purging fluid stream (for example, air taken from the environment) to the one or more respective treatment compartments 2 to be regenerated, for discharging the purging fluid stream from the one or more respective treatment compartments 2 to be regenerated, and for heating the at least one adsorbent element 3 of the one or more respective treatment compartments 2 to be regenerated. Overall, the plurality of configurations corresponds to the regeneration of all of the treatment compartments 2. During use, at least one treatment compartment 2 is in operating condition in which at least part of the gaseous stream to be treated flows through it, whilst the regeneration system is operated in such a way that it adopts the plurality of configurations in sequence so as to cyclically switch each treatment compartment 2 from the operating condition to the regeneration condition and vice versa.

The regeneration system comprises a heating system for heating the adsorbent elements 3, in order to promote desorption during regeneration. The heating system can be switched on selectively for heating the at least one adsorbent element 3 of one or more treatment compartments 2 without being switched on for the at least one adsorbent element 3 of the remaining treatment compartments 2. In other words, the heating system is designed in such a way as to enable heating only of the adsorbent elements 3 of the treatment compartments in the regeneration phase. In particular, the heating system is based on electric heating by Joule effect and comprises switches for switching on or off the electricity supply to the individual treatment compartments 2.

The treatment apparatus 1 comprises a control system, for example an electronic control unit, that is suitable for controlling operation of the treatment apparatus 1 and in particular the regeneration phases.

The details of the specific embodiment shown in the figures are described below.

Each of the adsorbent elements 3 comprises an adsorbent material that is activated carbon. More particularly, each adsorbent element 3 comprises a sheet or a portion of cloth with activated carbon. A cloth with activated carbon is, for example, a cloth impregnated with activated carbon or a cloth made of activated carbon fibres (known in the literature as "activated carbon cloth" or "activated carbon fibres").

One type of cloth with activated carbon that has proved effective has roughly the following properties:
- thickness approximately 0.45 - 0.75 mm;
- surface density approximately 120 - 200 g/m²;
- specific active surface area approximately 1500 - 2500 m²/g;
- adsorption capacity at equilibrium approximately 3% - 10% by weight (mass of volatile organic substance by mass of cloth) for concentrations of volatile organic substance of approximately 10 - 100 ppm and at 100°C;
- electrical resistivity at 0°C approximately 4.25 - 5.25 mΩ·m;
- temperature coefficient of resistivity approximately between -0.008 mΩ·m/K and -0.006 mΩ·m/K;
- diameter of fibres of the cloth less than 20 µm, in particular approximately 8 - 12 µm;
- mechanical tensile strength: between 8 and 30 kg/50mm for the warp, between 5 and 20 kg/50mm for the weft;
- flow resistance: for a transversal air flow with velocity v (in m/s) at 100°C, the head loss (in mm H₂O) through a single sheet of cloth with thickness 0.6 mm is approximately Δp = A·v + B·v², with coefficients A = 140 mm H₂O·m⁻¹·s (±25%) and B = 27 mm H₂O·m⁻²·s² (±10%).

Specifically, it is "active carbon cloth derived from thermally treated phenolic resin fibre".

Each adsorbent element 3 has a substantially tubular elongate shape. The adsorbent material forms a tubular wall 31 that separates an inner region 38 of the adsorbent element 3 from an outer region 39. The tubular wall 31 is intended to be passed through by the gaseous stream from the outer region 39 towards the inner region 38, or vice versa.

In particular, the tubular wall 31 is formed by a sheet of adsorbent material, such as the above-mentioned cloth with activated carbon, wrapped round into a tube shape.

For example, the tubular wall 31 has a height of 2.1 m, a circular cross-section with 12 cm diameter and comprises five superposed layers of cloth with activated carbon. Counting the five superposed layers, the surface area of the cloth with activated carbon is 4.2 m² for each adsorbent element 3 and approximately 100 m² for each treatment compartment 2.

Alternatively to the cloth with activated carbon, each adsorbent element 3 comprises a sheet or a portion of cloth with zeolite, or a sheet or a portion of cloth with another activated material. The structural aspects described above are similarly also applicable to these alternatives.

The adsorbent element 3 also comprises a support 32 for the tubular wall 31. The support 32 is suitable for maintaining the shape of the tubular wall 31 and allowing the passage of the gaseous stream between the outer region 39 and the inner region 38. For example, the support 32 comprises a cylindrical cage or a similar metal structure, on which the sheet of adsorbent material is wrapped. In order to prevent the sheet of adsorbent material from unwrapping from the support 32, metal clamps may be used (for example, copper clamps) or rings made of metal wire, for tying around the outside of the tubular wall 31 in a plurality of positions distributed along the length of the tubular wall 31.

In itself, the support 32 may be similar to that of the bags of bag filters. The support 32 also comprises two end elements 321, 322 which are fixed or welded to the cylindrical cage. The two end elements 321, 322 have a cylindrical lateral wall without openings and the two ends of the tubular wall 31 are fitted and clamped on those end elements 321, 322, in such a way that in the joining zones there are no preferred passages for the gaseous stream.

In the embodiment illustrated, the tube formed by the adsorbent element 3 is closed at the bottom end (the end element 321 is blind) and is open at the top end (the end element 322 is open).

For each treatment compartment 2, the adsorbent elements 3 are mounted on a top plate 26 equipped with corresponding holes, the adsorbent elements 3 passing through and projecting above the holes. The top plate 26, suitably fixed, holds the adsorbent elements 3 suspended in a main chamber 29 of the treatment compartment 2. The top plate 26 also functions as a panel that divides that main chamber 29 from a top chamber 28 that is in communication with the respective outlet 24.

In particular, each adsorbent element 3 is insertable in the top plate 26 (or removable from it) working from above and is held in position by its weight and by a fixing bar 261 fixed to the top plate 26. The upper end element 322 is equipped with a handle 325 for removing the adsorbent element 3.

The treatment compartment 2 also comprises a bottom chamber 27 that is in communication with the respective inlet 23. The bottom chamber 27, located below the adsorbent elements 3 and at a distance from them, is separated from the main chamber 29 by a bottom plate 25 that has passage apertures 251. The main function of the bottom plate 25 is structural for the box-shaped casing and it may not be present.

The gaseous stream that enters the treatment compartment 2 through the inlet 23 from the distribution chamber 21, therefore, arrives in the main chamber 29 by passing through the bottom chamber 27 and the passage apertures 251, it passes through the tubular walls 31 of the adsorbent elements 3 and enters the inner regions 38 of the latter, it enters the top chamber 28 by coming out of the open top ends of the adsorbent elements 3 and, passing through the outlet 24, it reaches the collection chamber 22. As the gaseous stream passes through the tubular walls 31 of the adsorbent elements 3, the adsorbent material adsorbs the organic compounds and the other compounds to be removed from the gaseous stream. Therefore, each adsorbent element 3 is a filter element that filters the gaseous stream and retains the compounds to be removed.

In contrast, the purging fluid stream follows an inverse path.

However, in alternative embodiments, the gaseous stream path could be inverted, that is to say, from the inside towards the outside of the adsorbent elements 3, or even the gaseous stream could strike the adsorbent elements 3 rather than passing through them. In other alternative embodiments, the purging fluid stream could be in the same direction as the gaseous stream to be treated.

In the embodiment illustrated herein, the heating of the adsorbent material during the regeneration phase is achieved by Joule effect in the self-same adsorbent material. Relative to this, each adsorbent element 3 comprises adsorbent material that is electrically conductive and the regeneration system is designed for applying an electric potential difference to the at least one adsorbent element 3 in the regeneration condition, so that the adsorbent material of the adsorbent element 3 has an electric current flow through it which heats it by Joule effect. In other words, the adsorbent material behaves like an electric resistor. The inventors have verified that the above-mentioned cloth with activated carbon is suitable for this purpose.

The temperature to which the adsorbent material must be heated is around 200 - 350 °C, depending on the adsorption properties of the material, on its capacity for withstanding high temperatures and on the operating parameters set for the apparatus 1. With the specific sizing of the tubular wall 31 as indicated above, the electric power required for heating a single adsorbent element 3 is approximately several kilowatts and may vary with the temperature.

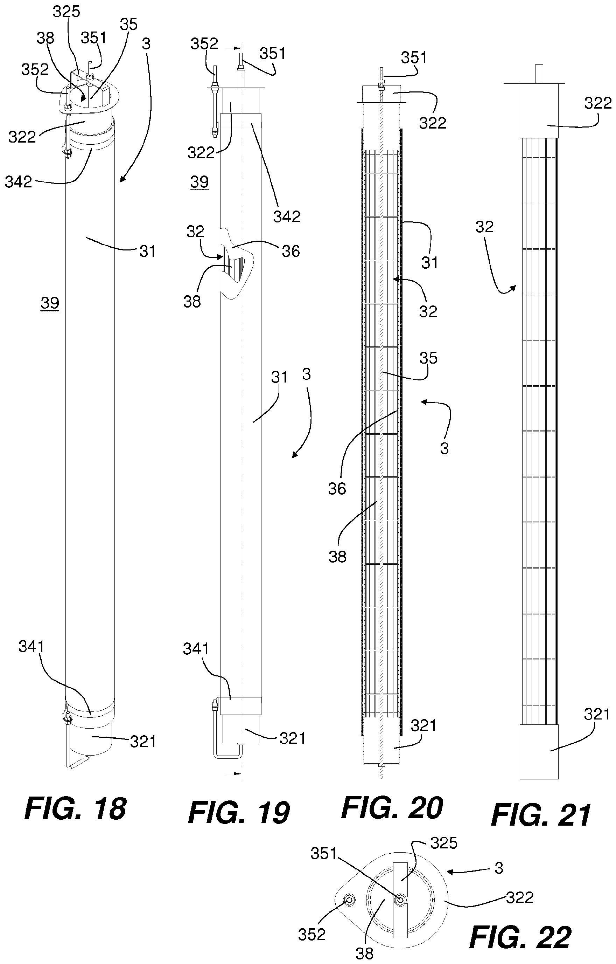

As shown in Figures 18 to 22, straps or rings 341, 342 (connected to respective electric terminals 351, 352), made of copper or another electrically conductive material, are fixed to the opposite ends of the tubular wall 31 of adsorbent material for applying a potential difference suitable for producing an electric current that flows through the whole length of the tubular wall 31 and that affects the entire tubular wall. For example, the cloth with activated carbon is wrapped into a tube shape in the direction of the weft and the electric current flows through the warp fibres. The two rings 341, 342, as well as enabling the electrical connection, also clamp the tubular wall 31 on the end elements 321, 322.

In order to have the two electric terminals 351, 352 at the same end, in particular at the top where the adsorbent elements 3 are mounted on the top plate 26, the adsorbent element 3 comprises an electrically conductive bar 35 substantially coaxial with the inner region 38 and having a first end electrically connected to the lower ring 341 and a second end that projects at the top. Suitable electrically insulating members (for example made of steatite) hold in position and insulate the electric terminals 351, 352 and the bar 35 relative to the end elements 321, 322.

If the support 32 is made of electrically conductive material, an electrically insulating layer 36 is interposed between the support 32 and the tubular wall 31 to prevent the electric current from flowing through the support 32 instead of the adsorbent material. If the gaseous stream has to pass through the adsorbent material, the electrically insulating layer 36 must also be permeable to the gaseous stream. For example, the electrically insulating layer 36 may be a sleeve made of fibreglass cloth or made of ceramic cloth. Alternatively, the support 32 may be made of material that is not electrically conductive, in which case the electrically insulating layer 36 would not be necessary.

In an alternative embodiment, the support 32 could be used as an electrode in place of the electrically conductive bar 35, obviously with the appropriate modifications.

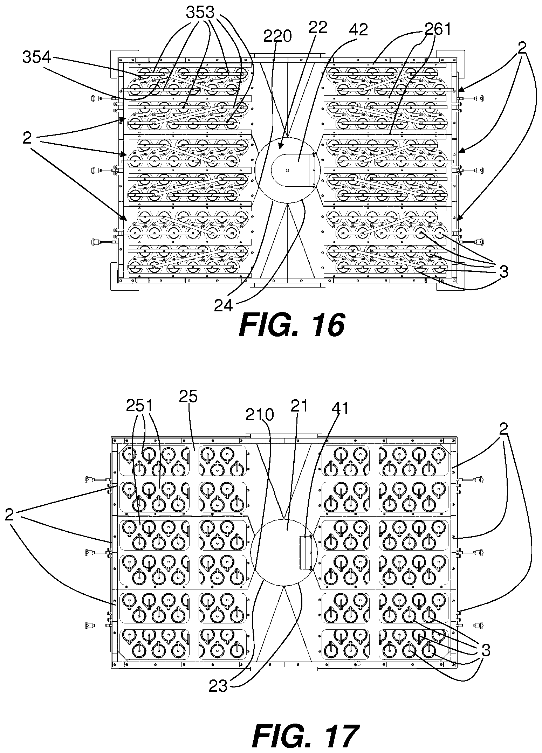

Preferably, the adsorbent elements 3 in each treatment compartment 2 are in numbers that are multiples of three. That allows a three-phase alternating current power supply (in particular at 400 V) that is balanced in terms of the load. In each treatment compartment 2 the adsorbent elements 3 are equally divided into three groups; each group is connected to a respective phase wire with a triangle configuration. In Figure 16 the connections between the terminals 351 are labelled 353 and the connections between the terminals 352 are labelled 354.

In the particular embodiment illustrated, the twenty-four adsorbent elements 3 are divided into two groups; the two groups are connected to the electricity supply independently of one another. In each group of twelve adsorbent elements 3: pairs of adsorbent elements 3 are connected to each other in series and for each phase wire two pairs are connected to each other in parallel.

It should be noticed that the figures do not show all of the electrical connections of the treatment apparatus 1, however, the aspects that are not shown are within reach of the experts in the field.

In alternative embodiments, the heating of the adsorbent elements 3 may be performed differently. For example, each adsorbent element 3 could comprise an electric resistance heater (for example, mounted on the support 32) that is not the adsorbent material. That is useful in particular if the adsorbent material is not electrically conductive or is not conductive enough to produce adequate heating by Joule effect. Alternatively, the adsorbent material could be heated with a hot air stream, that for example could be the purging fluid stream heated to a suitable temperature before being fed to the treatment compartments 2 to be regenerated.

In the embodiment illustrated, the regeneration system comprises a first duct 41 that is movable relative to the distribution chamber 21 and is designed to adopt a plurality of positions in the distribution chamber 21. The first movable duct 41 is positioned at least partly in the distribution chamber 21. In each of said positions, the first movable duct 41 is in communication with one or more respective treatment compartments 2 and excludes communication between the distribution chamber 21 and said one or more respective treatment compartments 2. For example, as shown in the figures, the first movable duct 41 is in communication with only one treatment compartment 2 at a time, therefore, in each position the other five treatment compartments 2 are in communication with the distribution chamber 21. Specifically, in each position the first movable duct 41 is in sealed contact with the wall 210 of the distribution chamber 21 and is in communication with the inlet 23 of the respective treatment compartment 2 (or, if necessary, with the inlets 23 of the respective treatment compartments 2), which in that way is disconnected from the distribution chamber 21.

The regeneration system also comprises a second duct 42 that is movable relative to the collection chamber 22 and is designed to adopt a plurality of positions in the collection chamber 22. The second movable duct 42 is positioned at least partly in the collection chamber 22. In each of said positions, the second movable duct 42 is in communication with one or more respective treatment compartments 2 and excludes communication between the collection chamber 22 and said one or more respective treatment compartments 2. For example, as shown in the figures, the second movable duct 42 is in communication with only one treatment compartment 2 at a time, therefore, in each position the other five treatment compartments 2 are in communication with the collection chamber 22. Specifically, in each position the second movable duct 42 is in sealed contact with the wall 220 of the collection chamber 22 and is in communication with the outlet 24 of the respective treatment compartment 2 (or, if necessary, with the outlets 24 of the respective treatment compartments 2), which in that way is disconnected from the collection chamber 22.

One of the two movable ducts 41, 42 is intended to feed the purging fluid stream to the respective treatment compartment 2 (or to the respective treatment compartments) with which it is in communication; the other of the two movable ducts 41, 42 is intended to discharge the purging fluid stream from the respective treatment compartment 2 (or from the respective treatment compartments) with which it is in communication. Each configuration of the regeneration system therefore corresponds to respective positions of the first movable duct 41 and of the second movable duct 42.

In the specific embodiment, the second movable duct 42 is the feeding duct and it receives air from the outside environment. The first movable duct 41 is the discharging duct and is connected to an exhaust pipe 43 for the purging fluid stream. As already indicated, the flow of the purging fluid stream in the treatment compartments 2 is therefore in the opposite direction to the flow of the gaseous stream to be treated.

The regeneration system comprises a fan or an extractor (not illustrated) which forces the purging fluid stream along the path. In particular, the regeneration system is intended to operate in a negative pressure condition, therefore, a fan or an extractor is positioned along the exhaust pipe 43.

The control system is suitable for controlling the position of the first movable duct 41 relative to the distribution chamber 21 and the position of the second movable duct 42 relative to the collection chamber 22. The regeneration system comprises, for example, motors 48 for moving the movable ducts 41, 42. The motors 48 are operated by the control system. Specifically, the motors 48 are gearmotors.

The control system makes the first movable duct 41 and the second movable duct 42 to be suitably positioned at the inlet and the outlet of the one or more treatment compartments 2 to be regenerated and switches on the heating for the latter. The control system cyclically switches each treatment compartment 2 from the operating condition to the regeneration condition and vice versa.

In particular, the first movable duct 41 and the second movable duct 42 are rotatable in the distribution chamber 21 and in the collection chamber 22, respectively, the movement from one position to another being a rotating movement about a respective axis of rotation 40, that is, for example, a vertical axis. The wall 210 of the distribution chamber 21 and the wall 220 of the collection chamber 22 are, for example, cylindrical walls.

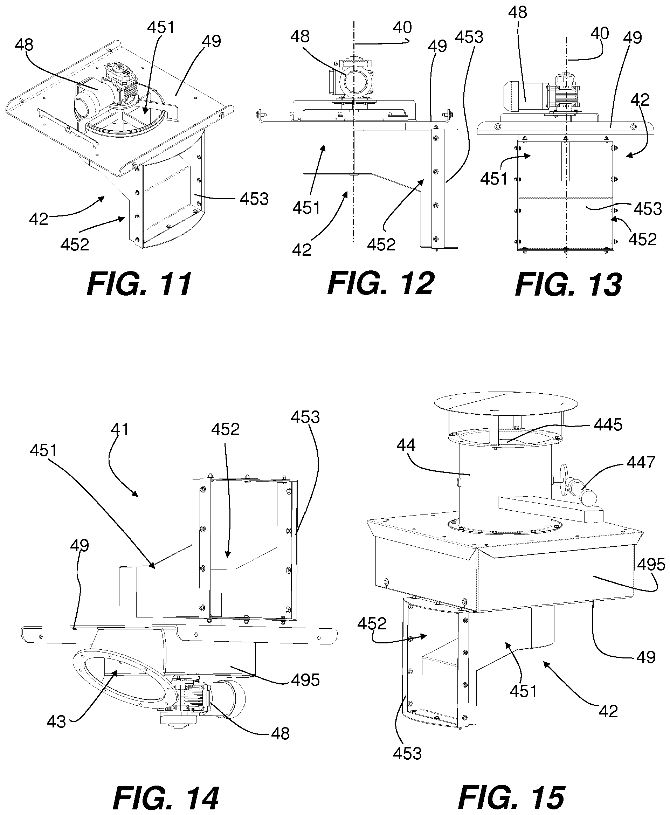

Figures 11 to 13 show the second movable duct 42. The first movable duct 41, shown in Figure 14, is substantially identical but is positioned symmetrically relative to a horizontal plane.

Each movable duct 41, 42 is basically a rotating nozzle. It comprises a first hollow part 451 and a second hollow part 452, which communicate with each other. The first hollow part 451 is central relative to the axis of rotation 40, is hinged to a plate 49 fixed to the respective wall 12, 13 of the apparatus 1 and is in communication with the exhaust pipe 43 or with the outside environment. The plate 49 has an opening at the first hollow part 451. The second hollow part 452 is eccentric relative to the axis of rotation 40 and also has a mouth 453 facing radially relative to the axis of rotation 40 and intended to be positioned at the respective inlets 23 or outlets 24 of the treatment compartments 2. The perimeter of the mouth 453 is shaped to create a seal on the lateral wall 210, 220 of the respective chamber 21, 22 at the inlets 23 or outlets 24.

The motor 48, controlled by the control system, makes the movable duct 41, 42 rotate about the axis of rotation 40. The two movable ducts 41, 42 are rotatable independently of each other and, therefore, as is described below, during a regeneration phase they may be positioned at different compartments 2. However, alternatively, they may be rotatable together.

For the first movable duct 41, the exhaust pipe 43 comes out of a fixed head 495 that is mounted in a sealed way under the plate 49, so that there are no leaks of the purging fluid stream to the outside.

For the second movable duct 42, in the embodiment in Figures 11 to 13 there is neither a fixed head nor a pipe present, since the sucking in of external air occurs directly through the opening in the plate 49 at the first hollow part 451. A covering cap 497, with grille-type lateral walls to allow the passage of air, is mounted on the plate 49.

In an alternative embodiment shown in Figure 15, even for the second movable duct 42 there are a fixed head 495, mounted in a sealed way on the plate 49, and an infeed pipe 44 present. Positioned in the infeed pipe 44 there is a valve 445 (for example, a throttle valve), equipped with an actuator 447, for choking the passage cross-section and adjusting the head loss through the infeed pipe 44. In order to prevent unwanted leakage of polluting substances into the atmosphere, it is preferable that the treatment compartments 2 in the regeneration phase are at a lower pressure than the treatment compartments 2 in the operating phase (that is to say, that they are in a greater negative pressure condition compared with the outside environment). The valve 445 allows adjustment of that greater negative pressure condition.

In other alternative embodiments in which regeneration is performed simultaneously for more than one treatment compartment 2, each movable duct may have multiple second hollow parts 452 (and relative mouths 453) which are connected to the first hollow part 451.

The treatment apparatus 1 may also comprise a disposal unit for the purging fluid stream discharged from the at least one or more treatment compartments in the regeneration condition. That disposal unit may, for example, be a burner, a catalytic converter, a catalytic or post-catalytic combuster, or another known type of filter (such as a filter using activated carbon granules) which allows economical treatment of the purging fluid stream, which has a low flow rate compared with the gaseous stream to be treated and is very rich in polluting compounds.

A dust removal apparatus such as a bag filter may be upstream of the treatment apparatus 1, in order to remove dust from the gaseous stream to be treated before it enters the treatment apparatus 1 through the infeed opening 17.

In one example of use of a plant for the production of bituminous macadams, the gaseous stream to be treated is 60,000 Nm³/h and has a concentration of 125 mg/m³ of volatile organic substances. The temperature of the gaseous stream at the apparatus 1 infeed is 110 °C.

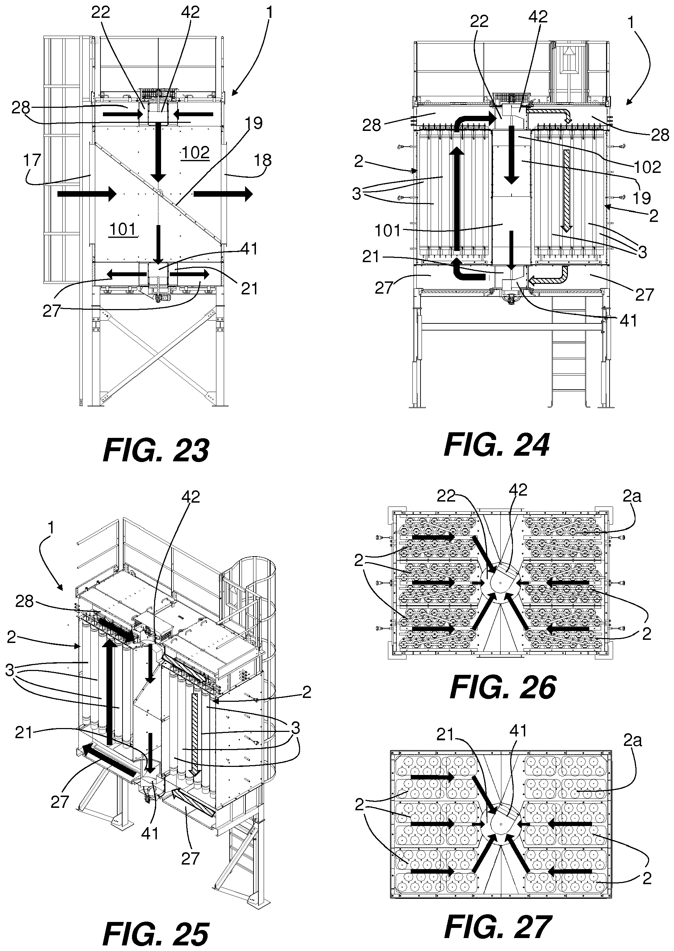

As shown in Figures 23 to 27, the gaseous stream enters the infeed opening 17 and moves into the distribution chamber 21, where it is divided between the treatment compartments 2 in the operating condition, entering the inlets 23 that are not closed by the first movable duct 41. In those compartments 2 suction is created by the fan or extractor located downstream of the outfeed opening 18. Specifically, the gaseous stream is divided between five compartments 2. The movable ducts 41, 42 are at the inlet 23 and the outlet 24 of the sixth treatment compartment (labelled 2a), which is in the non-operating phase and does not receive the gaseous stream.

For each of those treatment compartments 2, the respective part of the gaseous stream flows through the treatment compartment 2, passing from the bottom chamber 27 into the main chamber 29, from which the only possible way out is through the adsorbent elements 3. Therefore, the gaseous stream goes through the tubular walls 31 made of adsorbent material, which retains the volatile organic substances and/or the other pollutants in the gaseous stream. Through the inner regions 38 of the adsorbent elements 3, the purified gaseous stream goes into the top chamber 28 from which, through the outlet 24, it reaches the collection chamber 22 where the flows through the compartments 2 are collected. From here, the purified gaseous stream exits through the outfeed opening 18 and is discharged into the atmosphere.

For example, the treatment apparatus 1 enables the removal of approximately 80 - 85% of the total organic carbon contained in the gaseous stream fed in.

The adsorbent material of the operating adsorbent elements 3 gradually becomes saturated and must be regenerated. For example, regeneration must be performed after around 25 minutes.

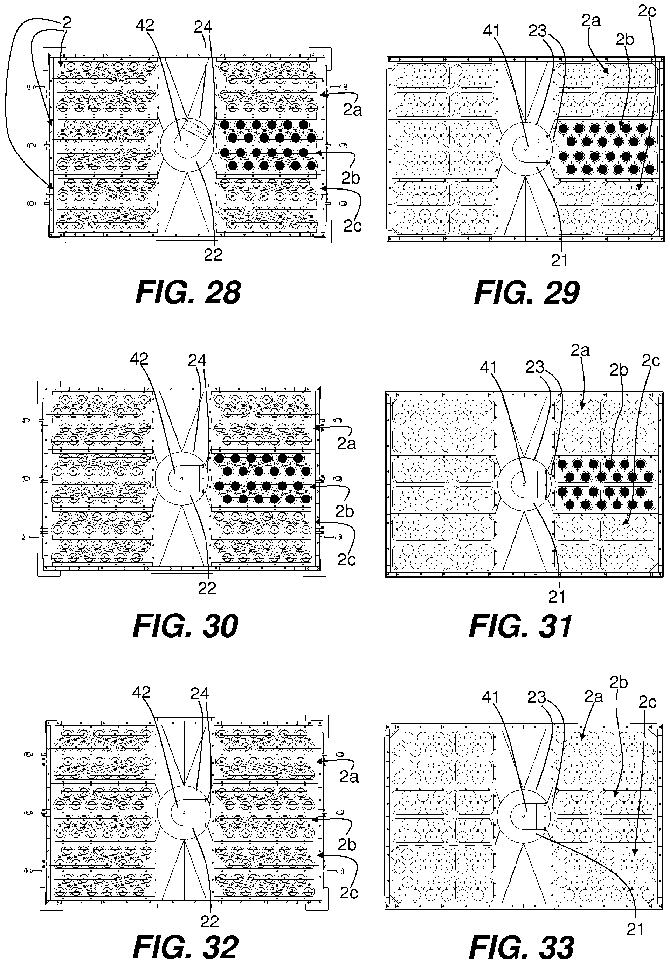

Figures 28 to 33 show the regeneration of the treatment compartment labelled 2b.

In a first step (pre-heating step shown in Figures 28 and 29), the first movable duct 41 is moved onto the inlet 23 of the compartment 2b. The second movable duct 42 remains on the outlet 24 of the non-operating compartment 2a. The gaseous stream to be treated no longer reaches the compartment 2b and heating of the adsorbent elements 3 is switched on for that compartment. The gaseous stream continues to be treated in the remaining four compartments 2. The fan of the regeneration system is kept at the minimum and, therefore, a small part of the gaseous stream treated is sucked into the compartment 2b through the outlet 24. Since the gaseous stream treated is hot, that is little hindrance to heating of the adsorbent elements 3. The first step may last, for example, 1 minute.

In a second step (regeneration step shown in Figures 30 and 31), the second movable duct 42 is moved onto the outlet 24 of the compartment 2b. The previously non-operating compartment 2a, having both the inlet 23 and the outlet 24 free, switches to the operating condition. The heating remains on for the compartment 2b. With the heating switched on, the temperature of the adsorbent material of the compartment 2b for example increases by around 60°C per minute.

A measurement of the temperature of the adsorbent elements 3 may be obtained by means of suitably positioned thermocouples, which for example are positioned in the adsorbent elements 3 and/or in the treatment compartments 2 in the spaces between the adsorbent elements 3. Alternatively, during the heating, a measurement of the temperature of the adsorbent elements 3 may be obtained by using an ammeter to measure the electric current drawn by the adsorbent elements 3: since the electrical resistivity of the cloth with activated carbon decreases with an increase in temperature, the electric current drawn can be correlated with the temperature of the adsorbent elements 3.

The fan of the regeneration system is kept at the minimum: a small purging fluid stream (external air) enters the compartment 2b in the regeneration phase from the outlet 24 and removes the volatile organic substances (and the other pollutants) that have been desorbed following heating of the adsorbent material. The purging stream laden with pollutants exits the compartment 2b through the inlet 23 and, passing through the first movable duct 41 and the exhaust pipe 43, is sent to the disposal unit or treated in another way. The second step may last, for example, 2 minutes.

In a third step (cooling step shown in Figures 32 and 33) the desorption is substantially complete, the heating of the compartment 2b is switched off and the fan of the regeneration system is brought to the maximum in order to make a large fluid stream circulate (in practice, this is external air that remains clean), which cools the adsorbent elements 3 returning them to a temperature below 140°C.

Moreover, any dusts built up on the adsorbent elements 3 are blown away and fall towards the bottom of the compartment 2b. The third step may last, for example, 2 minutes.

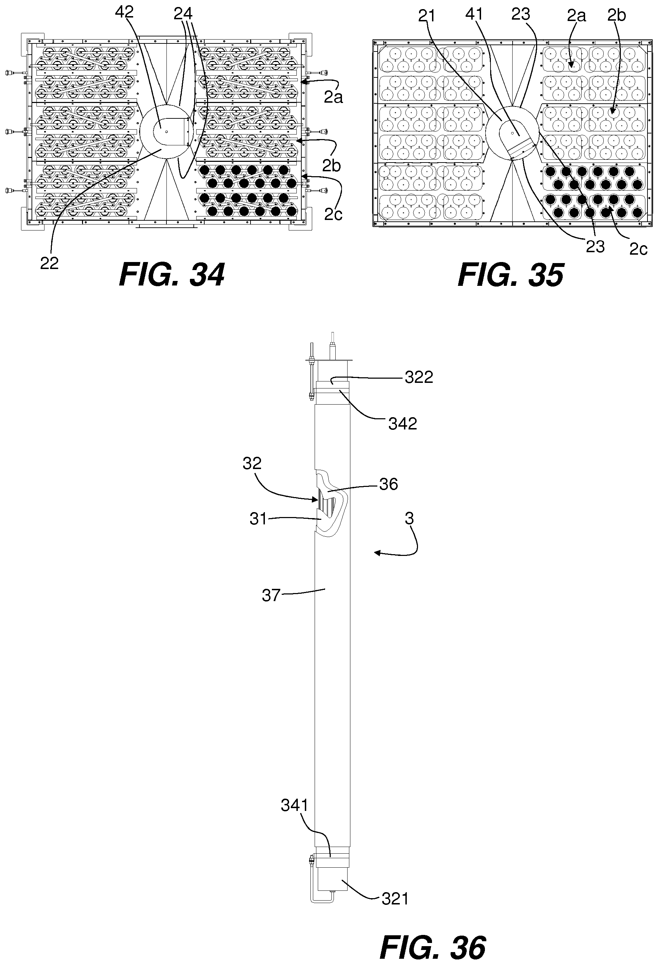

The fan of the regeneration system is then brought to the minimum and the first movable duct 41 is moved onto the inlet 23 of the next compartment 2c (Figures 34 and 35). That corresponds to the first step described above, applied for regeneration of the compartment 2c.

The operations described above are cyclically repeated for all of the compartments 2.

For example, the purging air flow is around 1,000 - 2,000 m³/h, which is very low compared with the 60,000 Nm³/h of the gaseous stream to be treated.

It shall be understood that the times indicated above for the operating steps are examples relating to a specific operating condition of the treatment apparatus 1. Those times also depend on the gaseous stream flow rate, on the concentration of organic compounds and/or of polluting substances in the gaseous stream and on the operating temperature. The times of the steps may be suitably modified according to requirements.

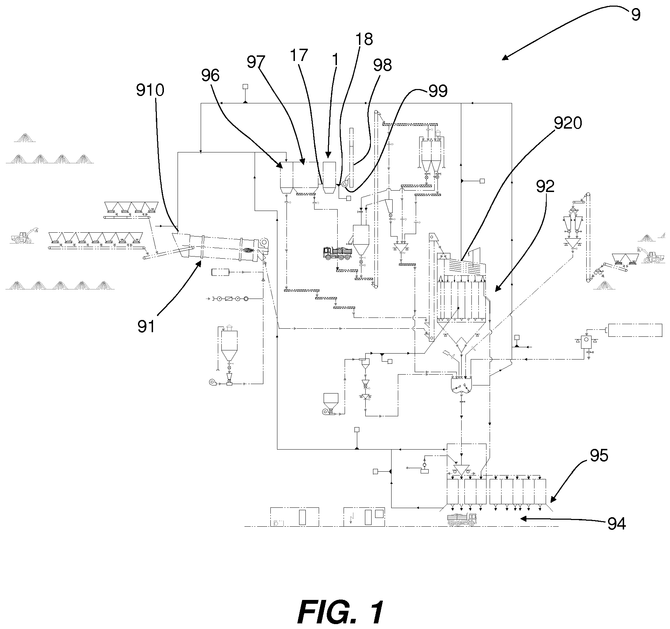

An example of a diagram of a plant for the production of bituminous macadams, according to this invention, is shown in Figure 1, where it is generically labelled with the numeral 9. The plant 9 differs from the prior art substantially due to the presence of a treatment apparatus 1.

The plant 9 comprises at least one processing unit which, during operation, produces off-gases containing organic compounds that contribute to the total organic carbon and/or other polluting compounds. That processing unit is, for example, a heating or drying unit, such as a rotating cylinder furnace 91, or a mixing unit 92.

The exhaust 910, 920 of the off-gases from the respective processing unit 91, 92 is connected by suitable pipes to the infeed opening 17 of the treatment apparatus 1, for conveying the off-gases to the treatment apparatus in order to reduce their total organic carbon and/or other polluting compounds before the off-gases are discharged into the atmosphere.

The outfeed opening 18 of the treatment apparatus 1 is connected to a chimney 98, with a fan 99 interposed between them.

A dust removal apparatus such as a bag filter 97 is upstream of the treatment apparatus 1, between the exhaust 910, 920 and the infeed opening 17, for eliminating dusts from the off-gases. There may also be a pre-filter 96 present, for example a cyclone, for eliminating sand and rougher dusts.

The plant 9 also comprises at least one working area 94 which produces a diffuse gaseous emission containing organic compounds that contribute to the total organic carbon and/or other polluting compounds. The working area 94 is, for example, an area for loading and/or unloading bituminous materials or bituminous macadams, which release volatile organic compounds. The plant 9 also comprises a collecting apparatus 95 for collecting said diffuse gaseous emission from the working area 94. For example, the working area 94 is kept in a negative pressure condition and the collecting apparatus 95 is an extractor.

The collecting apparatus 95 is connected to the infeed opening 17 of the treatment apparatus 1 for transferring the diffuse gaseous emission collected from the collecting apparatus 95 to the treatment apparatus 1. That is useful for also reducing as much as possible the diffuse emissions produced by the plant 9.

In particular, the exhaust 910, 920 from the processing unit 91, 92 and the collecting apparatus 95 are connected to the same treatment apparatus 1. Alternatively, the treatment apparatus 1 could be intended to treat only the off-gases from the processing units 91, 92 or only the diffuse emissions collected by the collecting apparatus 95.

In an alternative embodiment of the treatment apparatus 1, each adsorbent element 3 comprises a sheet of filtering material 37 with a permeability such that the sheet of filtering material can be passed through by the gaseous stream and can retain dust conveyed by the gaseous stream. An example of an adsorbent element made in accordance with that alternative embodiment is shown in Figure 36. The sheet of filtering material 37, which for example is the material used in the bags of bag filters, is superposed on the tubular wall 31 made of adsorbent material and in particular is upstream of the latter relative to the direction of the gaseous stream to be filtered. With reference to the configuration described above, the sheet of filtering material externally coats the tubular wall 31. In that alternative embodiment, the adsorbent element 3 is also usable as a dust removal bag and the treatment apparatus 1 is suitable for operating as a filter for dust removal from the gaseous stream, as well as for reducing the content of total organic carbon and/or the content of other polluting compounds. In other words, the bag filter 97 is integrated in the treatment apparatus 1.

In another alternative embodiment, the adsorbent material may itself have a permeability such that it retains the dust conveyed by the gaseous stream. In that case, the sheet of filtering material and the tubular wall made of adsorbent material would coincide. That is to say, they would not be two materials with different functions, but a single material fulfilling both functions.

If it is also used as a dust removal filter, the bottom part of the treatment apparatus 1 could be suitably modified to allow the collection and removal of dusts after filtering.

Thanks to the use of cloth with activated material (which allows space saving compared with granules of activated material) and the arrangement of the treatment compartments, the treatment apparatus 1 described above occupies little space and can easily be placed in the plant.

The invention described above may be modified and adapted in several ways without thereby departing from the scope of the appended claims.

All details may be substituted with other technically equivalent elements and the materials used, as well as the shapes and dimensions of the various components, may vary according to requirements.

## Claims

1. A gaseous stream treatment apparatus (1) for reducing the content of total organic carbon and/or the content of other polluting compounds in the gaseous stream,
the treatment apparatus (1) comprising:
- a plurality of treatment compartments (2), each of which is equipped with at least one adsorbent element (3) suitable for adsorbing organic compounds that contribute to the total organic carbon and/or other polluting compounds;
- an infeed opening (17) for the gaseous stream to be treated;
- a distribution chamber (21) that is in communication with the infeed opening (17) and onto which respective inlets (23) of the treatment compartments (2) open;
- an outfeed opening (18) for the gaseous stream treated;
- a collection chamber (22) that is in communication with the outfeed opening (18) and onto which respective outlets (24) of the treatment compartments (2) open;
- a regeneration system for regeneration of the adsorbent elements (3) by means of desorption, wherein the regeneration system can adopt a plurality of configurations, each configuration corresponding to a regeneration condition of one or more respective treatment compartments (2), the regeneration system being suitable for feeding a purging fluid stream to the one or more respective treatment compartments (2) to be regenerated, for discharging the purging fluid stream from said one or more respective treatment compartments (2) to be regenerated, and for heating the at least one adsorbent element (3) of said one or more respective treatment compartments (2) to be regenerated;
wherein, during use, at least one treatment compartment (2) is in operating condition in which at least part of the gaseous stream to be treated flows through it and the regeneration system is operated in such a way that it adopts the plurality of configurations in sequence so as to cyclically switch each treatment compartment (2) from the operating condition to the regeneration condition and vice versa;
**characterised in that**
each adsorbent element (3) comprises adsorbent material that is a sheet or a portion of cloth with activated carbon or is a sheet or a portion of cloth with zeolite.

2. The gaseous stream treatment apparatus (1) according to claim 1, wherein each adsorbent element (3) has a substantially tubular elongate shape, the adsorbent element (3) comprising a tubular wall (31) that separates an inner region (38) of the adsorbent element (3) from an outer region (39), the tubular wall (31) being intended to be passed through by the gaseous stream from the outer region (39) towards the inner region (38), or vice versa,
wherein the tubular wall (31) is formed by the adsorbent material being the sheet or the portion of cloth with activated carbon or with zeolite, wherein the sheet or the portion of cloth is wrapped round into a tube shape.

3. The gaseous stream treatment apparatus (1) according to claim 2,
wherein each adsorbent element (3) comprises a sheet of filtering material (37) with a permeability such that the sheet of filtering material can be passed through by the gaseous stream and can retain dust conveyed by the gaseous stream,
the sheet of filtering material (37) and the tubular wall (31) made of adsorbent material being superposed or coinciding,
the adsorbent element (3) also being a dust removal bag and the treatment apparatus (1) also being suitable for operating as a filter for dust removal from the gaseous stream.

4. The gaseous stream treatment apparatus (1) according to any of claims 1 to 3, wherein each adsorbent element (3) comprises a support (32) for the tubular wall (31) and an electrically insulating layer (36) interposed between the support (32) and the adsorbent material of the tubular wall (31), the support (32) comprising for example a cage or a structure made of metal.

5. The gaseous stream treatment apparatus (1) according to any of claims 1 to 4, wherein the adsorbent material is electrically conductive and the regeneration system is designed for applying an electric potential difference to the at least one adsorbent element (3) to be regenerated, the adsorbent material of the adsorbent element (3) to be regenerated having an electric current flow through it that heats it by Joule effect.

6. The gaseous stream treatment apparatus (1) according to any of claims 1 to 5, wherein the regeneration system comprises:
- a first duct (41) that is movable relative to the distribution chamber (21) and designed to adopt a plurality of positions in the distribution chamber (21), in each of said positions the first movable duct (41) being in communication with one or more respective treatment compartments (2) and excluding communication between the distribution chamber (21) and said one or more respective treatment compartments (2);
- a second duct (42) that is movable relative to the collection chamber (22) and designed to adopt a plurality of positions in the collection chamber (22), in each of said positions the second movable duct (42) being in communication with one or more respective treatment compartments (2) and excluding communication between the collection chamber (22) and said one or more respective treatment compartments (2);
wherein one of the first movable duct (41) or the second movable duct (42) is intended to feed the purging fluid stream to the one or more respective treatment compartments (2) with which it is in communication, the other of the first movable duct (41) or the second movable duct (42) is intended to discharge the purging fluid stream from the one or more respective treatment compartments (2) with which it is in communication;
each configuration of the regeneration system corresponding to respective positions of the first movable duct (41) and of the second movable duct (42).

7. The gaseous stream treatment apparatus (1) according to claim 6, wherein the inlets (23) of the treatment compartments (2) open on a wall (210) of the distribution chamber (21) and, in each position, the first movable duct (41) is in sealed contact with the wall (210) of the distribution chamber (21) and is in communication with the inlets (23) of the one or more respective treatment compartments (2);
wherein the outlets (24) of the treatment compartments (2) open on a wall (220) of the collection chamber (22) and, in each position, the second movable duct (42) is in sealed contact with the wall (220) of the collection chamber (22) and is in communication with the outlets (24) of the one or more respective treatment compartments (2).

8. The gaseous stream treatment apparatus (1) according to claim 7, wherein the first movable duct (41) and the second movable duct (42) are rotatable in the distribution chamber (21) and in the collection chamber (22), respectively, the movement from one position to another being a rotating movement.

9. The gaseous stream treatment apparatus (1) according to any of claims 1 to 8, having a central region (10) around which the treatment compartments (2) are positioned, the distribution chamber (21) and the collection chamber (22) being on opposite sides of the central region (10).

10. The gaseous stream treatment apparatus (1) according to any of claims 1 to 9, also comprising a disposal unit for the purging fluid stream discharged from the at least one or more treatment compartments (2) in the regeneration condition.

11. The gaseous stream treatment apparatus (1) according to any of claims 1 to 10, wherein in each treatment compartment (2) each adsorbent element (3) is mounted on a top plate (26) which holds each adsorbent element (3) suspended in a main chamber (29) of the treatment compartment (2).

12. A plant (9) for the production of bituminous macadams, comprising at least one processing unit (91, 92) which during operation produces an off-gas containing organic compounds that contribute to the total organic carbon and/or other polluting compounds, the processing unit (91, 92) being, for example, a heating unit, a drying unit or a mixing unit,
the plant (9) also comprising a gaseous stream treatment apparatus (1) according to any of claims 1 to 11,
an exhaust (910, 920) for the off-gas from the processing unit (91, 92) being connected to the infeed opening (17) of the treatment apparatus (1) for conveying the off-gas to the treatment apparatus (1).

13. A plant (9) for the production of bituminous macadams, comprising at least one working area (94) which produces a diffuse gaseous emission containing organic compounds that contribute to the total organic carbon and/or other polluting compounds, the working area (94) being, for example, an area for loading and/or unloading bituminous materials or bituminous macadams,
the plant (9) also comprising a collecting apparatus (95) for collecting the diffuse gaseous emission from the working area (94) and a gaseous stream treatment apparatus (1) according to any of claims 1 to 11,
the collecting apparatus (95) being connected to the infeed opening (17) of the treatment apparatus (1) for transferring the diffuse gaseous emission collected from the collecting apparatus (95) to the treatment apparatus (1).

14. The plant (9) for the production of bituminous macadams according to claim 12 in combination with claim 13, wherein the exhaust (910, 920) for the off-gas from the processing unit (91, 92) and the collecting apparatus (95) are connected to the same treatment apparatus (1).

## Patentansprüche

1. Eine Gasstrombehandlungsvorrichtung (1) zur Reduzierung des Inhalts an gesamtem organischem Kohlenstoff und/oder des Inhalts an anderen verunreinigenden Verbindungen im Gasstrom, wobei die Behandlungsvorrichtung (1) Folgendes umfasst:
- eine Mehrzahl von Behandlungskammern (2), von denen jede mit mindestens einem Adsorptionselement (3) ausgestattet ist, das sich zur Adsorption organischer Verbindungen, die zur Menge an gesamtem organischem Kohlenstoff und/oder sonstigen verunreinigenden Verbindungen beitragen, eignet;
- eine Zuflussöffnung (17) für den zu behandelnden Gasstrom;
- eine Verteilerkammer (21), die mit der Zuflussöffnung (17) kommuniziert und auf die sich jeweilige Einlässe (23) der Behandlungskammern (2) öffnen;
- eine Abflussöffnung (18) für den behandelten Gasstrom;
- eine Sammelkammer (22), die mit der Abflussöffnung (18) kommuniziert und auf die sich jeweilige Auslässe (24) der Behandlungskammern (2) öffnen;
- eine Regenerationsanlage zur Regenerierung der Adsorptionselemente (3) mithilfe von Desorption, wobei die Regenerationsanlage eine Mehrzahl von Konfigurationen einnehmen kann, dabei entspricht jede Konfiguration einem Regenerationszustand einer oder mehrerer der jeweiligen Behandlungskammern (2), die Regenerationsanlage eignet sich dabei zur Zuführung eines Stroms einer Spülflüssigkeit zu der einen oder zu mehreren jeweiligen Behandlungskammern (2), die zu regenerieren sind, zum Ablassen des Spülflüssigkeitsstroms aus besagter einer oder mehreren Behandlungskammern (2), die zu regenerieren sind, und zur Aufheizung des mindestens einen Adsorptionselements (3) der besagten einen oder mehreren Behandlungskammern (2), die zu regenerieren sind;
wobei im Gebrauch mindestens eine Behandlungskammer (2) in einem Betriebszustand ist, in dem zumindest ein Teil des zu behandelnden Gasstroms durch sie hindurchströmt und die Regenerationsanlage solcherart betrieben wird, dass sie die Mehrzahl der Konfigurationen nacheinander durchläuft, um zyklisch jede Behandlungskammer (2) vom Betriebszustand in den Regenerationszustand und umgekehrt hin- und herzuschalten; **gekennzeichnet dadurch, dass**
jedes Adsorbtionselement (3) adsorbierendes Material beinhaltet, das ein Stück oder ein Teil eines Tuchs mit aktiviertem Kohlenstoff ist oder ein Stück oder ein Teil eines Tuchs mit Zeolith ist.

2. Die Gasstrombehandlungsvorrichtung (1) nach dem Patentanspruch 1, wobei jedes Adsorptionselement (3) eine im Wesentlichen röhrenförmige längliche Form hat, das Adsorptionselement (3) umfasst dabei eine röhrenförmige Wand (31), die einen Innenbereich (38) des Adsorptionselements (3) von einem äußeren Bereich (39) trennt, die röhrenförmige Wand (31) dient dabei dazu, von dem Gasstrom vom äußeren Bereich (39) in Richtung des Innenbereichs (38) oder umgekehrt durchströmt zu werden,
wobei die röhrenförmige Wand (31) aus dem adsorbierenden Material besteht, das das Stück oder Teil eines Tuchs mit aktiviertem Kohlenstoff oder mit Zeolith ist, wobei das Stück oder Teil eines Tuchs rund in die Form einer Röhre gewickelt ist.

3. Die Gasstrombehandlungsvorrichtung (1) nach dem Patentanspruch 2, wobei jedes Adsorptionselement (3) ein Blatt eines Filtermaterials (37) mit einer solchen Permeabilität beinhaltet, dass das Blatt des Filtermaterials vom Gasstrom durchdrungen werden kann und Staub, der vom Gasstrom transportiert wird, zurückhalten kann,
dabei liegen das Blatt des Filtermaterials (37) und die röhrenförmige Wand (31), die aus adsorbierendem Material besteht, übereinander oder decken einander,
das Adsorptionselement (3) ist dabei außerdem ein Staubentfernungsbeutel und die Behandlungsvorrichtung (1) eignet sich dabei auch für die Funktion als Filter zur Entfernung von Staub aus dem Gasstrom.

4. Die Gasstrombehandlungsvorrichtung (1) nach jedem der Patentansprüche 1 bis 3, wobei jedes Adsorptionselement (3) eine Halterung (32) für die röhrenförmige Wand (31) und eine elektrisch isolierende Schicht (36), die zwischen der Halterung (32) und dem adsorbierenden Material der röhrenförmigen Wand (31) eingefügt ist, beinhaltet, die Halterung (32) beinhaltet zum Beispiel einen Käfig oder eine Struktur aus Metall.

5. Die Gasstrombehandlungsvorrichtung (1) nach jedem der Patentansprüche 1 bis 4, wobei das adsorbierende Material elektrisch leitfähig ist und die Regenerationsanlage konzipiert ist, um eine elektrische Potenzialdifferenz an dem mindestens einem zu regenerierenden Adsorptionslement (3) anzuwenden, dabei fließt ein elektrischer Strom durch das adsorbierende Material des zu regenerierenden Adsorptionslements (3) und heizt es aufgrund des Joule-Effekts auf.

6. Die Gasstrombehandlungsvorrichtung (1) nach jedem der Patentansprüche 1 bis 5, wobei die Regenerationsanlage Folgendes umfasst:
- einen ersten Kanal (41), der im Verhältnis zur Verteilerkammer (21) beweglich ist und konzipiert ist, um eine Mehrzahl von Positionen in der Verteilerkammer (21) einzunehmen, in jeder der besagten Positionen kommuniziert der erste bewegliche Kanal (41) dabei mit einer oder mehreren entsprechenden Behandlungskammern (2) und schließt die Kommunikation zwischen der Verteilerkammer (21) und besagter einer oder mehreren entsprechenden Behandlungskammern (2) aus;
- einen zweiten Kanal (42), der im Verhältnis zur Sammelkammer (22) beweglich ist und dazu konzipiert ist, eine Mehrzahl von Positionen in der Sammelkammer (22) einzunehmen, in jeder der besagten Positionen kommuniziert der zweite bewegliche Kanal (42) dabei mit einer oder mehreren entsprechenden Behandlungskammern (2) und schließt die Kommunikation zwischen der Sammelkammer (22) und besagter einer oder mehreren entsprechenden Behandlungskammern (2) aus;
wobei entweder der erste bewegliche Kanal (41) oder der zweite bewegliche Kanal (42) dazu vorgesehen ist, den Spülflüssigkeitsstrom zu der einen oder zu mehreren entsprechenden Behandlungskammern (2), mit der/denen er kommuniziert, zu leiten, und wobei der jeweils andere aus dem ersten beweglichen Kanal (41) oder dem zweiten beweglichen Kanal (42) dazu vorgesehen ist, den Spülflüssigkeitsstrom aus der einen oder aus mehreren der entsprechenden Behandlungskammern (2), mit der/denen er kommuniziert, abzulassen;
jede Konfiguration der Regenerationsanlage entspricht dabei den jeweiligen Positionen des ersten beweglichen Kanals (41) und des zweiten beweglichen Kanals (42).

7. Die Gasstrombehandlungsvorrichtung (1) nach dem Patentanspruch 6, wobei sich die Einlässe (23) der Behandlungskammern (2) auf eine Wand (210) der Verteilerkammer (21) öffnen und, in jeder Position, der erste bewegliche Kanal (41) in versiegeltem Kontakt mit der Wand (210) der Verteilerkammer (21) steht und mit den Einlässen (23) der einen oder den mehreren jeweiligen Behandlungskammern (2) kommuniziert;
wobei sich die Auslässe (24) der Behandlungskammern (2) auf eine Wand (220) der Sammelkammer (22) öffnen und, in jeder Position, der zweite bewegliche Kanal (42) in versiegeltem Kontakt mit der Wand (220) der Sammelkammer (22) steht und mit den Auslässen (24) der einen oder der mehreren jeweiligen Behandlungskammern (2) kommuniziert.

8. Die Gasstrombehandlungsvorrichtung (1) nach dem Patentanspruch 7, wobei der erste bewegliche Kanal (41) und der zweite bewegliche Kanal (42) in der Verteilerkammer (21) und in der Sammelkammer (22) drehbar sind, dabei ist die Bewegung von einer Position in eine andere jeweils eine Rotationsbewegung.

9. Die Gasstrombehandlungsvorrichtung (1) nach jedem der Patentansprüche 1 bis 8, einen mittleren Bereich (10) habend, um den herum die Behandlungskammern (2) positioniert sind, die Verteilerkammer (21) und die Sammelkammer (22) befinden sich dabei an gegenüberliegenden Seiten des mittleren Bereichs (10).

10. Die Gasstrombehandlungsvorrichtung (1) nach jedem der Patentansprüche 1 bis 9, außerdem eine Entsorgungseinheit für den Spülflüssigkeitsstrom umfassend, der aus der mindestens einen oder den mehreren Behandlungskammern (2) im Regenerationszustand abgelassen wird.

11. Die Gasstrombehandlungsvorrichtung (1) nach jedem der Patentansprüche 1 bis 10, wobei in jeder Behandlungskammer (2) jedes Adsorptionselement (3) an einer Deckplatte (26) montiert ist, die jedes Adsorptionselement (3) in einer Hauptkammer (29) der Behandlungskammer (2) hängend hält.

12. Eine Anlage (9) zur Herstellung von bituminösen Makadamen, mindestens eine Verarbeitungseinheit (91, 92) umfassend, die im Betrieb ein Abgas erzeugt, das organische Verbindungen enthält, die zur Menge an gesamtem organischem Kohlenstoff und/oder anderen verunreinigenden Verbindungen beitragen, dabei ist die Verarbeitungseinheit (91, 92) zum Beispiel eine Heizeinheit, eine Trocknereinheit oder einer Mischereinheit, die Anlage (9) umfasst dabei auch eine Gasstrombehandlungsvorrichtung (1) nach jedem der Patentansprüche 1 bis 11,
ein Auslass (910 ,920) für das Abgas aus der Verarbeitungseinheit (91, 92), der dabei mit der Zuflussöffnung (17) der Behandlungsvorrichtung (1) verbunden ist, um das Abgas zur Behandlungsvorrichtung (1) zu leiten.

13. Eine Anlage (9) zur Herstellung von bituminösen Makadamen, mindestens einen Arbeitsbereich (94) umfassend, der eine diffuse Gasemission erzeugt, die organische Verbindungen enthält, die zur Menge an gesamtem organischem Kohlenstoff und/oder sonstigen verunreinigenden Verbindungen beitragen, der Arbeitsbereich (94) ist dabei zum Beispiel ein Bereich zum Laden und/oder Abladen bituminöser Werkstoffe oder bituminöser Makadamen,
die Anlage (9) umfasst dabei auch eine Sammelvorrichtung (95) zur Sammlung der diffusen Gasemission aus dem Arbeitsbereich (94) und eine Gasstrombehandlungsvorrichtung (1) nach jedem der Patentansprüche 1 bis 11,
die Sammelvorrichtung (95) ist dabei mit der Zuflussöffnung (17) der Behandlungsvorrichtung (1) verbunden, um die diffuse Gasemission, die von der Sammelvorrichtung (95) gesammelt wurde, zur Behandlungsvorrichtung (1) zu übertragen.

14. Die Anlage (9) zur Herstellung von bituminösen Makadamen nach dem Patentanspruch 12 in Verbindung mit dem Patentanspruch 13, wobei der Auslass (910, 920) für das Abgas aus der Verarbeitungseinheit (91, 92) und die Sammelvorrichtung (95) mit derselben Behandlungsvorrichtung (1) verbunden sind.

## Revendications

1. Un appareil de traitement de flux gazeux (1) pour réduire la teneur en carbone organique total et/ou la teneur en autres composés polluants dans le flux gazeux,
l'appareil de traitement (1) comprenant :
- une pluralité de compartiments de traitement (2), dont chacun est équipé d'au moins un élément adsorbant (3) destiné à adsorber des composés organiques qui contribuent au carbone organique total et/ou autres composés polluants ;
- une ouverture d'entrée (17) pour le flux gazeux à traiter ;
- une chambre de distribution (21) qui est en communication avec l'ouverture d'entrée (17) et sur laquelle débouchent des entrées (23) respectives des compartiments de traitement (2) ;
- une ouverture de sortie (18) pour le flux gazeux traité ;
- une chambre de collecte (22) qui est en communication avec l'ouverture de sortie (18) et sur laquelle débouchent des sorties (24) respectives des compartiments de traitement (2) ;
- un système de régénération pour la régénération des éléments adsorbants (3) par désorption, où le système de régénération peut prendre une pluralité de configurations, chaque configuration correspondant à une condition de régénération d'un ou plusieurs compartiments de traitement (2) respectifs, le système de régénération étant destiné à alimenter un flux de fluide de purge vers lesdits un ou plusieurs compartiments de traitement (2) respectifs à régénérer, pour évacuer le flux de fluide de purge desdits un ou plusieurs compartiments de traitement (2) respectifs à régénérer, et pour chauffer ledit au moins un élément adsorbant (3) desdits un ou plusieurs compartiments de traitement (2) respectifs à régénérer ;
dans lequel, en utilisation, au moins un compartiment de traitement (2) est dans une condition opérationnelle dans laquelle au moins une partie du flux gazeux à traiter le traverse et le système de régénération est actionné de manière à ce qu'il prenne la pluralité de configurations en séquence afin de faire passer cycliquement chaque compartiment de traitement (2) de la condition opérationnelle à la condition de régénération et inversement ; **caractérisé en ce que**
chaque élément adsorbant (3) comprend un matériau adsorbant qui est une feuille ou une portion de tissu avec du charbon actif ou est une feuille ou une portion de tissu avec de la zéolite.

2. L'appareil de traitement de flux gazeux (1) selon la revendication 1, dans lequel chaque élément adsorbant (3) a une forme allongée essentiellement tubulaire, l'élément adsorbant (3) comprenant une paroi tubulaire (31) qui sépare une région intérieure (38) de l'élément adsorbant (3) d'une région extérieure (39), la paroi tubulaire (31) étant destinée à être traversée par le flux gazeux de la région extérieure (39) vers la région intérieure (38), ou inversement,
dans lequel la paroi tubulaire (31) est formée par le matériau adsorbant qui est la feuille ou la portion de tissu avec du charbon actif ou avec de la zéolite, où la feuille ou la portion de tissu est enroulée en forme de tube.

3. L'appareil de traitement de flux gazeux (1) selon la revendication 2, dans lequel chaque élément adsorbant (3) comprend une feuille de matériau filtrant (37) avec une perméabilité telle que la feuille de matériau filtrant peut être traversée par le flux gazeux et peut retenir la poussière véhiculée par le flux gazeux,
la feuille de matériau filtrant (37) et la paroi tubulaire (31) réalisée en matériau adsorbant étant superposées ou coïncidant,
l'élément adsorbant (3) étant également un sac de dépoussiérage et l'appareil de traitement (1) étant également destiné à fonctionner comme un filtre pour le dépoussiérage du flux gazeux.

4. L'appareil de traitement de flux gazeux (1) selon l'une quelconque des revendications de 1 à 3, dans lequel chaque élément adsorbant (3) comprend un support (32) pour la paroi tubulaire (31) et une couche électriquement isolante (36) interposée entre le support (32) et le matériau adsorbant de la paroi tubulaire (31), le support (32) comprenant par exemple une cage ou une structure réalisée en métal.

5. L'appareil de traitement de flux gazeux (1) selon l'une quelconque des revendications de 1 à 4, dans lequel le matériau adsorbant est électriquement conducteur et le système de régénération est destiné à appliquer une différence de potentiel électrique audit au moins un élément adsorbant (3) à régénérer, le matériau adsorbant de l'élément adsorbant (3) à régénérer étant traversé par un courant électrique qui le chauffe par effet Joule.

6. L'appareil de traitement de flux gazeux (1) selon l'une quelconque des revendications de 1 à 5, dans lequel le système de régénération comprend :
- un premier conduit (41) qui est mobile par rapport à la chambre de distribution (21) et destiné à prendre une pluralité de positions dans la chambre de distribution (21), dans chacune desdites positions le premier conduit mobile (41) étant en communication avec un ou plusieurs compartiments de traitement (2) respectifs et excluant la communication entre la chambre de distribution (21) et lesdits un ou plusieurs compartiments de traitement (2) respectifs ;
- un deuxième conduit (42) qui est mobile par rapport à la chambre de collecte (22) et destiné à prendre une pluralité de positions dans la chambre de collecte (22), dans chacune desdites positions le deuxième conduit mobile (42) étant en communication avec un ou plusieurs compartiments de traitement (2) respectifs et excluant la communication entre la chambre de collecte (22) et lesdits un ou plusieurs compartiments de traitement (2) respectifs ;
dans lequel l'un entre le premier conduit mobile (41) ou le deuxième conduit mobile (42) est destiné à alimenter un flux de fluide de purge vers lesdits un ou plusieurs compartiments de traitement (2) respectifs avec lesquels il est en communication, l'autre entre le premier conduit mobile (41) ou le deuxième conduit mobile (42) est destiné à évacuer le flux de fluide de purge desdits un ou plusieurs compartiments de traitement (2) respectifs avec lesquels il est en communication ;
chaque configuration du système de régénération correspondant à des positions respectives du premier conduit mobile (41) et du deuxième conduit mobile (42).

7. L'appareil de traitement de flux gazeux (1) selon la revendication 6, dans lequel les entrées (23) des compartiments de traitement (2) débouchent sur une paroi (210) de la chambre de distribution (21) et, dans chaque position, le premier organe mobile (41) est en contact étanche avec la paroi (210) de la chambre de distribution (21) et est en communication avec les entrées (23) desdits un ou plusieurs compartiments de traitement (2) respectifs ;
dans lequel les sorties (24) des compartiments de traitement (2) débouchent sur une paroi (220) de la chambre de collecte (22) et, dans chaque position, le deuxième conduit mobile (42) est en contact étanche avec la paroi (220) de la chambre de collecte (22) et est en communication avec les sorties (24) desdits un ou plusieurs compartiments de traitement (2) respectifs.

8. L'appareil de traitement de flux gazeux (1) selon la revendication 7, dans lequel le premier conduit mobile (41) et le deuxième conduit mobile (42) peuvent être tournés dans la chambre de distribution (21) et dans la chambre de collecte (22), respectivement, le mouvement d'une position à une autre étant un mouvement de rotation.

9. L'appareil de traitement de flux gazeux (1) selon l'une quelconque des revendications de 1 à 8, ayant une région centrale (10) autour de laquelle les compartiments de traitement (2) sont positionnés, la chambre de distribution (21) et la chambre de collecte (22) étant situées sur des côtés opposés de la région centrale (10).

10. L'appareil de traitement de flux gazeux (1) selon l'une quelconque des revendications de 1 à 9, comprenant également une unité d'élimination pour le flux de fluide de purge évacué desdits au moins un ou plusieurs compartiments de traitement (2) dans la condition de régénération.

11. L'appareil de traitement de flux gazeux (1) selon l'une quelconque des revendications de 1 à 10, dans lequel dans chaque compartiment de traitement (2) chaque élément adsorbant (3) est monté sur une plaque supérieure (26) qui maintient chaque élément adsorbant (3) suspendu dans une chambre principale (29) du compartiment de traitement (2).

12. Une installation (9) pour la production de macadams bitumineux, comprenant au moins une unité de traitement (91, 92) qui, en fonctionnement, produit un dégagement gazeux contenant des composés organiques qui contribuent au carbone organique total et/ou autres composés polluants, l'unité de traitement (91, 92) étant, par exemple, une unité de chauffage, une unité de séchage ou une unité de mélange,
l'installation (9) comprenant également un appareil de traitement de flux gazeux (1) selon l'une quelconque des revendications de 1 à 11,
une évacuation (910, 920) pour le dégagement gazeux de l'unité de traitement (91, 92) étant raccordée à l'ouverture d'entrée (17) de l'appareil de traitement (1) pour acheminer le dégagement gazeux vers l'appareil de traitement (1).

13. Une installation (9) pour la production de macadams bitumineux, comprenant au moins une zone de travail (94) qui produit une émission gazeuse diffuse contenant des composés organiques qui contribuent au carbone organique total et/ou autres composés polluants, la zone de travail (94) étant, par exemple, une zone pour le chargement et/ou le déchargement de matériaux bitumineux ou de macadams bitumineux,
l'installation (9) comprenant également un appareil de collecte (95) pour collecter l'émission gazeuse diffuse de la zone de travail (94) et un appareil de traitement de flux gazeux (1) selon l'une quelconque des revendications de 1 à 11,
l'appareil de collecte (95) étant raccordé à l'ouverture d'entrée (17) de l'appareil de traitement (1) pour transférer l'émission gazeuse diffuse collectée de l'appareil de collecte (95) vers l'appareil de traitement (1).

14. L'installation (9) pour la production de macadams bitumineux selon la revendication 12 en combinaison avec la revendication 13, dans laquelle l'évacuation (910, 920) pour le dégagement gazeux de l'unité de traitement (91, 92) et l'appareil de collecte (95) sont raccordés au même appareil de traitement (1).
